# EUROPÄISCHE PATENTSCHRIFT

(11) **EP 4 405 189 B1**
(45) Veröffentlichungstag und Bekanntmachung des Hinweises auf die Patenterteilung: **29.10.2025**
(21) Anmeldenummer: 22797623.0
(22) Anmeldetag: 23.09.2022
(51) Int. Cl.: B60K 1/04, B60K 15/03, B66F 9/06, B66F 9/075, B66F 9/10

(54) **FAHRZEUG MIT SEITLICHER HUBEINRICHTUNG**
VEHICLE HAVING A LATERAL LIFTING DEVICE
VÉHICULE POURVU D'UN DISPOSITIF DE LEVAGE LATÉRAL

(30) Priorität: 24.09.2021 AT 507602021
(43) Veröffentlichungstag der Anmeldung: 31.07.2024
(73) Patentinhaber: Bulmor Holding GmbH, 1110 Wien (AT)
(72) Erfinder: SCHWEITZER, Peter, 4320 Windhaag bei Perg (AT)
(74) Vertreter: Burger, Hannes
(86) Internationale Anmeldenummer: PCT/AT2022/060313
(87) Internationale Veröffentlichungsnummer: WO 2023/044518

(56) Entgegenhaltungen:
- EP-A1- 2 196 430
- WO-A1-2017/161397
- WO-A2-01/79012

## Beschreibung

Die Erfindung betrifft ein Fahrzeug mit seitlicher Hubeinrichtung.

Aus der EP 0 870 727 B1 und der EP 2 518 010 B1 sind verschiedene Ausführungen von Seitenstaplern bekannt.

Die aus der EP 0 870 727 B1 und der EP 2 518 010 B1 bekannten Seitenstapler weisen den Nachteil auf, dass sie ein wenig flexibles Antriebskonzept aufweisen.

Aus der WO 2017/161397 A1 ist ein weiterer Seitenstapler bekannt. Die WO 01/79012 A2 offenbart ein Energiebereitstellungsmodul.

Aufgabe der vorliegenden Erfindung war es, die Nachteile des Standes der Technik zu überwinden und einen Seitenstapler und ein Verfahren zum Betrieb des Seitenstaplers zur Verfügung zu stellen, welche ein verbessertes Antriebskonzept aufweisen.

Diese Aufgabe wird durch eine Vorrichtung und ein Verfahren gemäß den Ansprüchen gelöst.

Erfindungsgemäß ist ein Fahrzeug mit seitlicher Hubeinrichtung ausgebildet. Das Fahrzeug umfasst zumindest einen ersten Achsträger und einen zweiten Achsträger, wobei die beiden Achsträger mittels einer seitlich außermittig angeordneten Verbindungskonstruktion miteinander gekoppelt sind und wobei die Hubeinrichtung in einem Freiraum zwischen den beiden Achsträgern angeordnet ist. Weiters ist ein Energiebereitstellungsmodul mit einem Energieträger zum Bereitstellen einer Antriebsenergie ausgebildet, wobei eine Energiebereitstellungsmodulaufnahme ausgebildet ist, welche zur Aufnahme des Energiebereitstellungsmoduls dient, wobei das Energiebereitstellungsmodul wechselbar an der Energiebereitstellungsmodulaufnahme angeordnet ist und am Energiebereitstellungsmodul ein erster Stecker eines Energieversorgungsstecksystems und an der Energiebereitstellungsmodulaufnahme ein zweiter Stecker des Energieversorgungsstecksystems ausgebildet ist, wobei im gesteckten Zustand des ersten Steckers und des zweiten Steckers des Energieversorgungsstecksystems eine Energieübertragungsverbindung zwischen dem Energiebereitstellungsmodul und der Energiebereitstellungsmodulaufnahme herstellbar ist, wobei die Energiebereitstellungsmodulaufnahme zur Aufnahme von unterschiedlichen Arten von Energiebereitstellungsmodulen mit unterschiedlichen Energieträgern ausgebildet ist.

Das erfindungsgemäße Fahrzeug bringt den Vorteil mit sich, dass durch die Möglichkeit zur Aufnahme von unterschiedlichen Arten von Energiebereitstellungsmodulen mit ein und demselben Grundaufbau des Fahrzeuges verschiedene Anwendungsmöglichkeiten bzw. Einsatzmöglichkeiten des Fahrzeuges erreicht werden können. Somit ist es beispielsweise möglich, einen leeren Akkumulator durch einen vollen Akkumulator zu ersetzen, um die Stillstandzeit des Fahrzeuges möglichst gering zu halten. Zusätzlich kann beispielsweise für unterschiedliche Anwendungsgebiete auch ein Energiebereitstellungsmodul mit einem Akkumulator durch ein Energiebereitstellungsmodul mit einem Verbrennungsmotor ersetzt werden.

Weiters kann vorgesehen sein, dass der Energieträger in Form eines Akkumulators ausgebildet ist, welcher zum Speichern von elektrischer Energie ausgebildet ist. Beispielsweise können verschiedenste Akkumulatoren auf Litium-, auf Natrium-, auf Nickel-, auf Blei- oder einer sonstigen Basis vorgesehen sein. Weiters ist es auch denkbar, dass beispielsweise ein Kondensator als Energieträger ausgebildet ist. In einer anderen Ausführungsvariante kann der Energieträger ein Tank für eine Verbrennungskraftmaschine sein, welcher beispielsweise mit Benzin, Diesel, Methan, Wasserstoff, Ethanol oder einem sonstigen Kraftstoff befüllt sein kann.

In wieder einer anderen Ausführungsvariante kann der Energieträger ein Tank für eine Brennstoffzelle sein, welcher beispielsweise mit Wasserstoff befüllbar sein kann. Die Brennstoffzelle selbst kann ebenfalls Teil des Energiebereitstellungsmodules sein.

Weiters kann es zweckmäßig sein, wenn das Energiebereitstellungsmodul in Draufsicht gesehen L-förmig ausgebildet ist und oberhalb von Teilbereichen des zweiten Achsträgers und Teilbereichen der Verbindungskonstruktion angeordnet ist. Besonders bei einer derartigen Formgebung ist es möglich, dass das Energiebereitstellungsmodul möglichst platzsparend im Fahrzeug angeordnet ist und gleichzeitig ein möglichst großes Volumen aufweist, um eine möglichst große Speicherkapazität zu erreichen. Gleichzeitig kann bei einer derartigen Ausbildung das Energiebereitstellungsmodul einfach vom Fahrzeug entfernt werden. Insbesondere kann vorgesehen sein, dass ein Schenkel des L-förmigen Energiebereitstellungsmodules oberhalb von Teilbereichen der Verbindungskonstruktion angeordnet ist und dass eine Basis des L-förmigen Energiebereitstellungsmodules oberhalb von Teilbereichen des zweiten Achsträgers angeordnet ist.

Ferner kann vorgesehen sein, dass am Energiebereitstellungsmodul zumindest eine Kranlasche angeordnet ist oder dass am Energiebereitstellungsmodul eine Staplergabelaufnahme ausgebildet ist. Dies bringt den Vorteil mit sich, dass das Energiebereitstellungsmodul einfach vom Fahrzeug entfernt werden kann bzw. auf dieses aufsetzt werden kann.

Darüber hinaus kann vorgesehen sein, dass eine Steuereinheit ausgebildet ist, wobei die Steuereinheit derart ausgebildet ist, dass die jeweilige Art aus unterschiedlichen Arten des aktuell mit der Energiebereitstellungsmodulaufnahme gekoppelten Energiebereitstellungsmodules erkennbar ist. Dies bringt den Vorteil mit sich, dass mittels der Steuereinheit je nach Art des mit dem Fahrzeug gekoppelten Energiebereitstellungsmoduls unterschiedliche Fahrzeugeinstellungen vorgenommen werden können. Insbesondere kann vorgesehen sein, dass die Art des aktuell mit der Energiebereitstellungsmodulaufnahme gekoppelten Energiebereitstellungsmoduls von der Steuereinheit automatisiert erkennbar ist. In einer alternativen Ausführungsvariante ist es auch denkbar, dass die Art des Energiebereitstellungsmoduls durch eine Benutzereingabe in die Steuereinheit eingegeben wird.

Vorteilhaft ist auch eine Ausprägung, gemäß welcher vorgesehen sein kann, dass am Energiebereitstellungsmodul ein Informationsträger, insbesondere ein RFID-Transponder, angeordnet ist, welcher zur Identifizierung der Art des Energiebereitstellungsmoduls dient. Dies bringt den Vorteil mit sich, dass die Art des Energiebereitstellungsmoduls automatisiert erkannt werden kann.

Gemäß einer Weiterbildung ist es möglich, dass am Energiebereitstellungsmodul oder an der Energiebereitstellungsmodulaufnahme Führungsstifte angeordnet sind, wobei die Führungsstifte vertikal ausgerichtet sind, sodass das Energiebereitstellungsmodul vertikal geführt auf die Energiebereitstellungsmodulaufnahme aufsetzbar ist und die Führungsstifte zur horizontalen Positionierung des Energiebereitstellungsmodules relativ zur Energiebereitstellungsmodulaufnahme dienen. Dies bringt den Vorteil mit sich, dass durch diese Maßnahme das Energiebereitstellungsmodul vereinfacht auf die Energiebereitstellungsmodulaufnahme aufgesetzt werden kann.

In einer alternativen Ausführungsvariante kann vorgesehen sein, dass ein oder mehrere Führungsbleche ausgebildet sind, welche zur horizontalen Positionierung des Energiebereitstellungsmodules relativ zur Energiebereitstellungsmodulaufnahme dienen. Insbesondere kann vorgesehen sein, dass die Führungsbleche an den Ecken der Energiebereitstellungsmodulaufnahme angeordnet sind und beispielsweise eine L-Form aufweisen, sodass eine exakte Positionierung des Energiebereitstellungsmodules erreicht werden kann. Insbesondere kann vorgesehen sein, dass die Führungsbleche an zwei einander gegenüberliegenden Ecken der Energiebereitstellungsmodulaufnahme angeordnet sind.

Weiters kann vorgesehen sein, dass die Führungsbleche an deren von der Energiebereitstellungsmodulaufnahme abgewandten Seite sich trichterförmig öffnend ausgebildet sind. Dadurch kann das Aufsetzen des Energiebereitstellungsmodules an der Energiebereitstellungsmodulaufnahme erleichtert werden.

Ferner kann es zweckmäßig sein, wenn der erste Stecker des Energieversorgungsstecksystems derart am Energiebereitstellungsmodul und der zweite Stecker des Energieversorgungsstecksystems derart an der Energiebereitstellungsmodulaufnahme positioniert ist, dass beim Aufbringen des Energiebereitstellungsmodules auf die Energiebereitstellungsmodulaufnahme automatisiert die Energieübertragungsverbindung herstellbar ist. Dies bringt den Vorteil mit sich, dass durch diese Maßnahme das Verfahren zum Koppeln des Energiebereitstellungsmodules mit der Energiebereitstellungsmodulaufnahme vereinfacht werden kann. Besonders bei einer derartigen Ausbildung kann es vorteilhaft sein, wenn zusätzlich die bereits erwähnten Führungsstifte vorhanden sind, um eine Beschädigung des Energieversorgungsstecksystems möglichst hintan zu halten.

Darüber hinaus kann vorgesehen sein, dass der Energieträger in Form eines Kraftstofftankes ausgebildet ist, welcher zur Kraftstoffversorgung einer am Energiebereitstellungsmodul angeordneten Verbrennungskraftmaschine dient, wobei die Verbrennungskraftmaschine mit einem ebenfalls am Energiebereitstellungsmodul angeordneten Generator gekoppelt ist. Ein derart ausgebildetes Energiebereitstellungsmodul kann eine hohe Leistungsabgabe aufweisen und eignet sich besonders gut für einen Betrieb des Fahrzeuges im Außenbereich bzw. für einen Langzeitbetrieb des Fahrzeuges. Insbesondere kann vorgesehen sein, dass die Verbrennungskraftmaschine in Form eines Dieselmotors ausgebildet ist.

Die Verbrennungskraftmaschine ist in einer bevorzugten Ausführungsvariante als Kolbenmotor ausgebildet. In einer alternativen Ausführungsvariante kann die Verbrennungskraftmaschine auch in Form eines Drehkolbenmotors, insbesondere Wankelmotor, ausgebildet sein.

In weiteren Ausführungsvarianten ist es jedoch auch denkbar, dass die Verbrennungskraftmaschine beispielsweise in Form einer Turbine ausgebildet ist.

Weiters kann vorgesehen sein, dass zusätzlich zur Verbrennungskraftmaschine und zum Generator ein Energiespeicher am Energiebereitstellungsmodul angeordnet ist. Dies bringt den Vorteil mit sich, dass die von der Verbrennungskraftmaschine erzeugte Energie im Energiespeicher zwischengespeichert werden kann. Weiters ist es durch eine derartige Ausführung auch denkbar, dass das Fahrzeug als Hybridfahrzeug betrieben werden kann, wobei beispielsweise für Fahrten in einem Innenbereich eine rein elektrische Antriebsweise gewählt wird und für Fahrten in einem Außenbereich alternativ oder zusätzlich die Verbrennungskraftmaschine zur Energiebereitstellung herangezogen wird. Hierbei ist es denkbar, dass im Fahrzeug ein Wahlschalter zur Auswahl der Ressource für die Energiebereitstellung angeordnet ist. In einer alternativen Ausführungsvariante ist es auch denkbar, dass die Auswahl der Ressource für die Energiebereitstellung automatisiert erfolgt. Dies kann beispielsweise durch Festlegen eines Geofence und entsprechende Positionsbestimmung des Fahrzeuges erfolgen. Alternativ kann dies auch durch Helligkeitssensoren erfolgen, mittels welchen detektiert werden kann, ob sich das Fahrzeug in einem Außenbereich, oder in einem Innenraum befindet.

Weiters kann vorgesehen sein, dass der Energiespeicher in Form eines Akkumulators ausgebildet ist. Beispielsweise können verschiedenste Akkumulatoren auf Litium-, auf Natrium-, auf Nickel-, auf Blei- oder einer sonstigen Basis vorgesehen sein.

Gemäß einer besonderen Ausprägung ist es möglich, dass eine Medienkupplung zur Übertragung eines Fluids ausgebildet ist. Dies bringt den Vorteil mit sich, dass das Energiebereitstellungsmodul beispielsweise mit einer Flüssigkeit zum Kühlen bzw. Heizen des Energiebereitstellungsmodules versorgt werden kann.

Erfindungsgemäß ist ein Verfahren zum Betreiben eines Fahrzeuges nach einer der obigen Ausprägungen ausgebildet. Hierbei kann vorgesehen sein, dass eine erste Art des Energiebereitstellungsmodules von der Energiebereitstellungsmodulaufnahme abgenommen und durch eine zweite Art des Energiebereitstellungsmodules ersetzt wird.

Das Verfahren weist den Vorteil auf, dass durch die Möglichkeit zur Aufnahme von unterschiedlichen Arten von Energiebereitstellungsmodulen mit ein und demselben Grundaufbau des Fahrzeuges verschiedene Anwendungsmöglichkeiten bzw. Einsatzmöglichkeiten des Fahrzeuges erreicht werden können. Somit ist es beispielsweise möglich, einen leeren Akkumulator durch einen vollen Akkumulator zu ersetzen, um die Stillstandzeit des Fahrzeuges möglichst gering zu halten. Zusätzlich kann beispielsweise für unterschiedliche Anwendungsgebiete auch ein Energiebereitstellungsmodul mit einem Akkumulator durch ein Energiebereitstellungsmodul mit einem Verbrennungsmotor ersetzt werden.

Darüber hinaus kann vorgesehen sein, dass die Art des aufgesetzten Energiebereitstellungsmodules mittels einer Steuereinheit automatisiert erkannt wird und Fahrzeugeinstellungen automatisiert an die Art des aufgesetzten Energiebereitstellungsmodules angepasst werden. Dies bringt den Vorteil mit sich, dass der Wechsel des Energiebereitstellungsmodules vereinfacht werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Darstellung eines ersten Ausführungsbeispiels eines Seitenstaplers von schräg oben;
- Fig. 2: eine weitere perspektivische Darstellung einer Rückseite des ersten Ausführungsbeispiels des Seitenstaplers von schräg oben;
- Fig. 3: das erste Ausführungsbeispiel des Seitenstaplers in einer Draufsicht;
- Fig. 4: eine schematische Darstellung eines ersten Ausführungsbeispiels eines Energiebereitstellungsmodules;
- Fig. 5: eine schematische Darstellung eines ersten Ausführungsbeispiels eines Energiebereitstellungsmodules.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

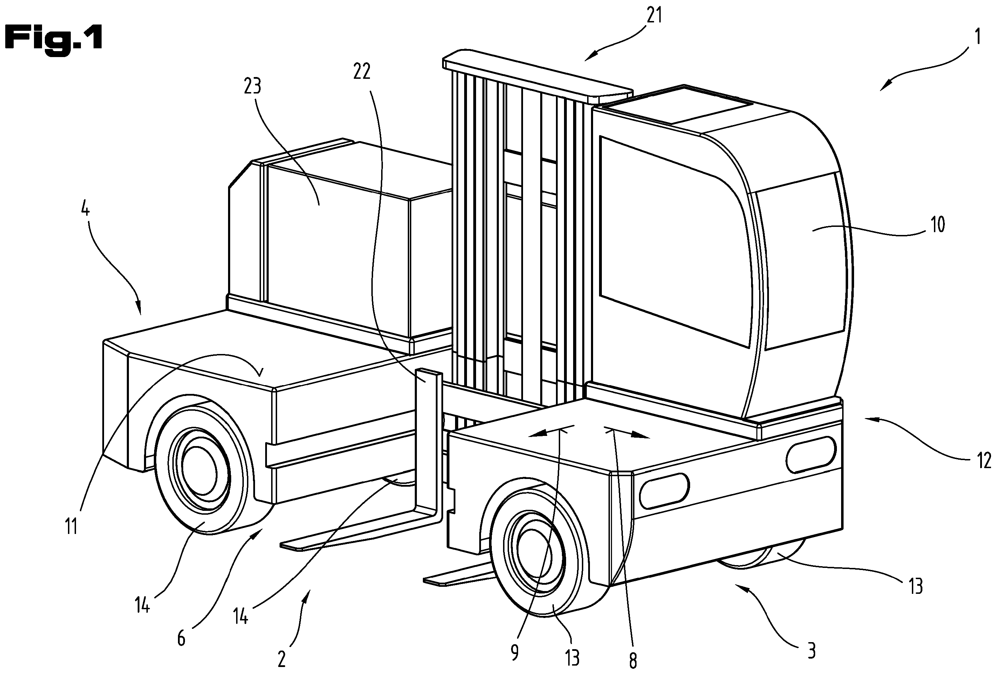

Fig. 1 zeigt eine perspektivische Ansicht eines Fahrzeuges 1 mit seitlicher Hubeinrichtung 2. Ein derartiges Fahrzeug 1 wird in der Fachsprache auch als Seitenstapler bezeichnet.

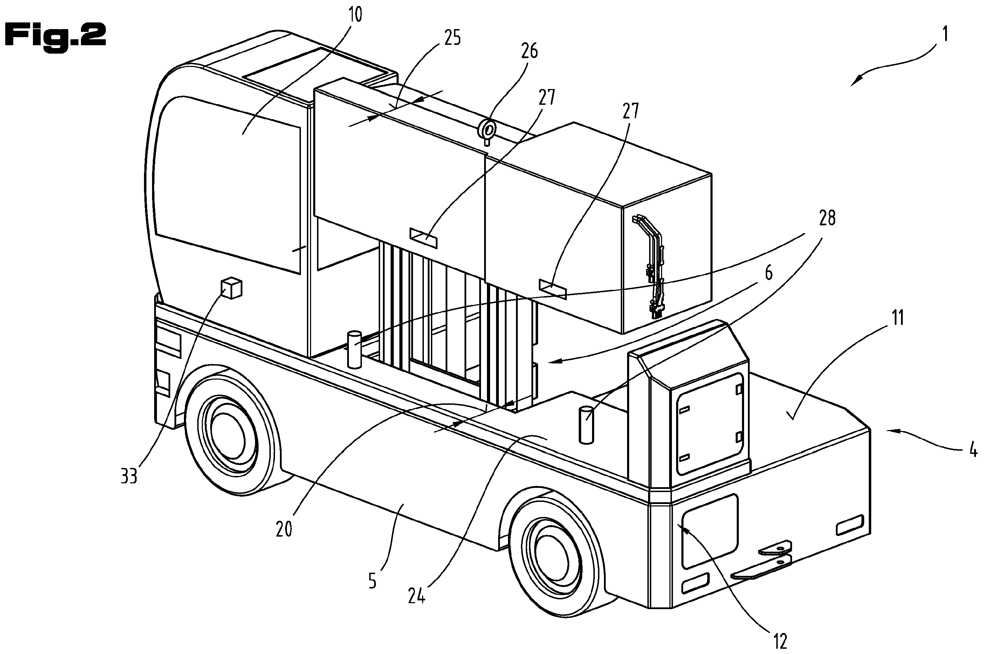

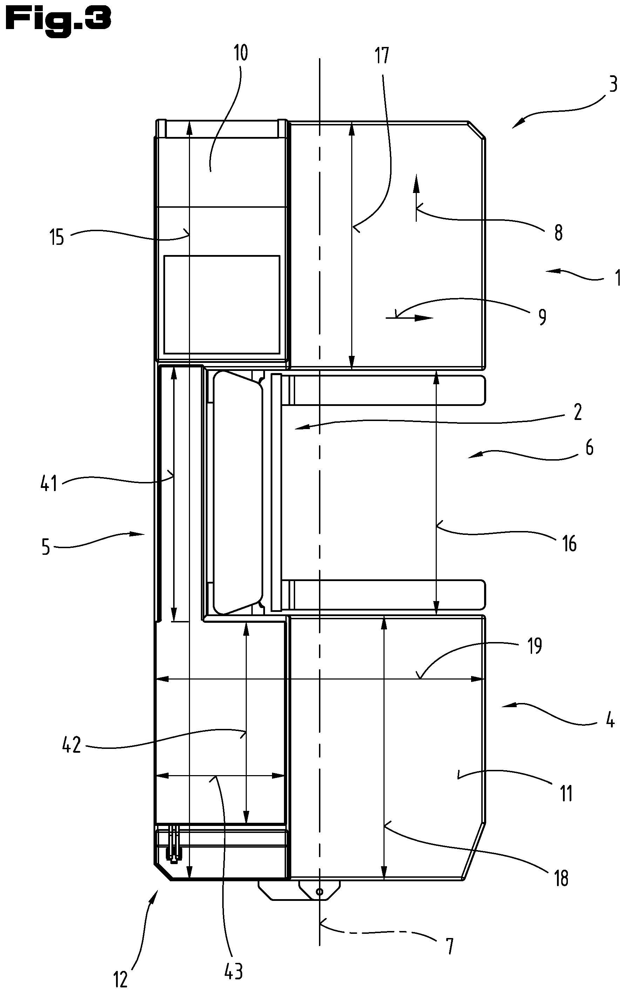

In den Figuren 2 und 3 ist das Fahrzeug 1 in weiteren Darstellungen gezeigt.

Die folgende Beschreibung basiert auf einer Zusammenschau der verschiedenen Darstellungen des ersten Ausführungsbeispiels des Fahrzeuges 1 in den Figuren 1 bis 3, wobei nicht in jeder einzelnen der Figuren alle Bauteilnummerierungen eingetragen sind, sondern zur Übersichtlichkeit die Bauteile nur in jenen Figuren bezeichnet wurden in denen Sie besonders gut ersichtlich sind. Es wird davon ausgegangen, dass es dem Fachmann klar ist, wie verschiedene Ansichten aus verschiedenen Blickwinkeln miteinander zu kombinieren sind.

Das Fahrzeug 1 weist einen ersten Achsträger 3 und einen zweiten Achsträger 4 auf, welche durch eine Verbindungskonstruktion 5 miteinander gekoppelt sind. Insbesondere sind die beiden Achsträger 3, 4 und die Verbindungskonstruktion 5 derart miteinander gekoppelt, dass sich an einer Seite des Fahrzeuges 1 ein Freiraum 6 ergibt. In der Draufsicht nach Fig. 3 gesehen, hat das Fahrzeug 1 eine U-förmige Formgebung, wobei die beiden parallelen Schenkeln des U durch den ersten Achsträger 3 und den zweiten Achsträger 4 gebildet sind.

Um den Freiraum 6 möglichst groß zu gestalten, ist die Verbindungskonstruktion 5 in Draufsicht auf das Fahrzeug 1 gesehen seitlich außermittig angeordnet. In einer bevorzugten Ausführungsvariante ist die Verbindungskonstruktion 5 möglichst weit an einem Seitenrand 12 der Achsträger 3, 4 angeordnet, sodass der Freiraum 6 möglichst groß ist. Mit anderen Worten ausgedrückt ist in Draufsicht gesehen, die Verbindungskonstruktion 5 zu einer mittig liegenden Längsachse 7 des Fahrzeuges 1 möglichst weit beabstandet.

Als Längsrichtung 8 des Fahrzeuges 1 wird jene Richtung definiert, welche parallel zur Fortbewegungsrichtung des Fahrzeuges 1 liegt. In der Draufsicht gesehen, ist im Winkel von 90° zur Längsrichtung 8 des Fahrzeuges 1 die Querrichtung 9 des Fahrzeuges 1 ausgebildet.

Vorzugsweise kann vorgesehen sein, dass das Fahrzeug 1 eine Hauptbewegungsrichtung aufweist, wobei diese derart gewählt ist, dass der erste Achsträger 3 bei vorwärtsfahrt vorne ist, sodass der erste Achsträger 3 auch als vorderer Achsträger bezeichnet werden kann. Der zweite Achsträger 4 kann analog dazu als hinterer Achsträger bezeichnet werden.

Weiters kann vorgesehen sein, dass eine Fahrerkabine 10 am Fahrzeug 1 angeordnet ist, wobei die Fahrerkabine 10 vorzugsweise am ersten Achsträger 3 angeordnet ist. In der Ausführungsvariante des Fahrzeuges 1 nach den Fig. 1 bis 3 ist die Fahrerkabine 10 in Fahrtrichtung gesehen, an der linken Seite des Fahrzeuges 1 angeordnet. Mit anderen Worten ausgedrückt, kann vorgesehen sein, dass die Fahrerkabine 10 an derselben Seite des Fahrzeuges 1 angeordnet ist, wie die Verbindungskonstruktion 5.

Weiters kann vorgesehen sein, dass am ersten Achsträger 3 und/oder am zweiten Achsträger 4 eine Auflageebene 11 ausgebildet ist, an welcher von der Hubeinrichtung 2 aufgenommene längliche Gegenstände abgelegt werden können. Die Auflageebene 11 kann durch die beschriebene Anordnung der Fahrerkabine 10 und der Verbindungskonstruktion 5 gebildet sein.

Der erste Achsträger 3 umfasst vorzugsweise ein erstes Radpaar 13 und der zweite Achsträger 4 umfasst vorzugsweise ein zweites Radpaar 14.

Insbesondere kann vorgesehen sein, dass das erste Radpaar 13 gelenkt ist, um das Fahrzeug 1 steuern zu können. Weiters ist es auch denkbar, dass alternativ dazu oder zusätzlich dazu das zweite Radpaar 14 gelenkt ist. Werden sowohl das erste Radpaar 13 als auch das zweite Radpaar 14 gelenkt, so kann dadurch der mögliche Kurvenradius des Fahrzeuges 1 verkleinert werden.

Die Achsträger 3, 4 können in Draufsicht gesehen, in etwa einen rechteckigen Querschnitt aufweisen.

Der Abstand bzw. die Anordnung des ersten Achsträgers 3 und des zweiten Achsträgers 4 zueinander bestimmt nicht nur eine Länge 15 des Fahrzeuges 1 sondern auch eine lichte Länge 16 des Freiraumes 6. Weiters kann vorgesehen sein, dass der erste Achsträger 3 eine erste Länge 17 aufweist. Der zweite Achsträger 4 kann eine zweite Länge 18 aufweisen. Die erste Länge 17 des ersten Achsträgers 3, die zweite Länge 18 des zweiten Achsträgers 4 und die lichte Länge 16 des Freiraumes 6 zusammen können die Länge 15 des Fahrzeuges 1 ergeben.

Weiters kann vorgesehen sein, dass das Fahrzeug 1 eine Gesamtbreite 19 aufweist. Die Verbindungskonstruktion 5 kann eine Verbindungskonstruktionsbreite 20 aufweisen.

Weiters kann vorgesehen sein, dass im Freiraum 6 ein Hubmast 21 angeordnet ist, welcher zum Anheben einer Hubgabel 22 dient.

Sämtliche Stellantriebe zum Bewegen von Einzelteilen des Fahrzeuges 1 und Fahrantriebe des Fahrzeuges 1 können in Form von Elektromotoren ausgebildet sein. Bei den Fahrantrieben ist es möglich, dass an nur einem der Achsträger 3, 4 ein Elektromotor ausgebildet ist, wobei der Elektromotor nur das Radpaar 13, 14 jenes Achsträgers 3, 4 antreibt, an welchem er angeordnet ist. In einer alternativen Ausführungsvariante ist es auch denkbar, dass der Elektromotor in der Verbindungskonstruktion 5 oder an einem der Achsträger 3, 4 angeordnet ist und mittels einer Kardanwelle beide Radpaare 13, 14 beider Achsträger 3, 4 mit dem gemeinsamen Elektromotor gekoppelt sind. In wieder einer anderen Ausführungsvariante ist es auch denkbar, dass an jedem der Achsträger 3, 4 jeweils ein Elektromotor ausgebildet ist, wobei die Elektromotoren jeweils das Radpaar 13, 14 jenes Achsträgers 3, 4 antreiben, an welchem sie angeordnet sind. In wieder einer anderen Ausführungsvariante ist es auch denkbar, dass jedes der einzelnen Räder der Radpaare 13, 14 mit einem eigenen Elektromotor gekoppelt ist.

Alternativ dazu kann vorgesehen sein, dass ein zentraler Elektromotor an ein Hydraulikaggregat gekoppelt ist und dass einzelne oder auch sämtliche Stellantriebe bzw. Fahrantriebe in Form eines Hydraulikmotors ausgebildet sind.

Wie aus Fig. 1 und besonders gut aus Fig. 2 ersichtlich, kann vorgesehen sein, dass ein Energiebereitstellungsmodul 23 ausgebildet ist, welches zum Koppeln mit einer Energiebereitstellungsmodulaufnahme 24 dient. Das Energiebereitstellungsmodul 23 kann zur Bereitstellung der Antriebsenergie für das Fahrzeug 1 dienen.

Wie besonders gut aus Fig. 2 ersichtlich, kann vorgesehen sein, dass das Energiebereitstellungsmodul 23 vom Fahrzeug 1 entfernbar ist. Insbesondere kann vorgesehen sein, dass das Energiebereitstellungsmodul 23 in einem Bereich oberhalb des zweiten Achsträgers 4 bzw. der Verbindungskonstruktion 5 angeordnet ist.

Wie aus Fig. 3 ersichtlich, kann vorgesehen sein, dass das Energiebereitstellungsmodul 23 in Draufsicht gesehen L-förmig ausgebildet ist. Insbesondere ist es hierbei denkbar, dass eine Schenkelbreite 25 eines Schenkels des Energiebereitstellungsmoduls 23 zwischen 70 % und 150 %, insbesondere zwischen 80 % und 120 %, bevorzugt zwischen 90 % und 110 % der Verbindungskonstruktionsbreite 20 beträgt.

Weiters kann vorgesehen sein, dass am Energiebereitstellungsmodul 23 eine Kranlasche 26 ausgebildet ist, welche zum Anheben des Energiebereitstellungsmoduls 23 mittels eines Hebemittels dient.

Alternativ dazu oder zusätzlich dazu kann vorgesehen sein, dass am Energiebereitstellungsmodul 23 eine Staplergabelaufnahme 27 aufgenommen ist, welche zum Anheben des Energiebereitstellungsmodules 23 mittels eines Flurförderfahrzeuges dient.

Wie aus Fig. 2 weiters ersichtlich, kann vorgesehen sein, dass im Bereich der Energiebereitstellungsmodulaufnahme 24 Führungsstifte 28 ausgebildet sind, welche zum Führen des Energiebereitstellungsmodules 23 dienen. Insbesondere kann vorgesehen sein, dass im Energiebereitstellungsmodul 23 mit den Führungsstiften 28 korrespondierende Führungsbohrungen angeordnet sind.

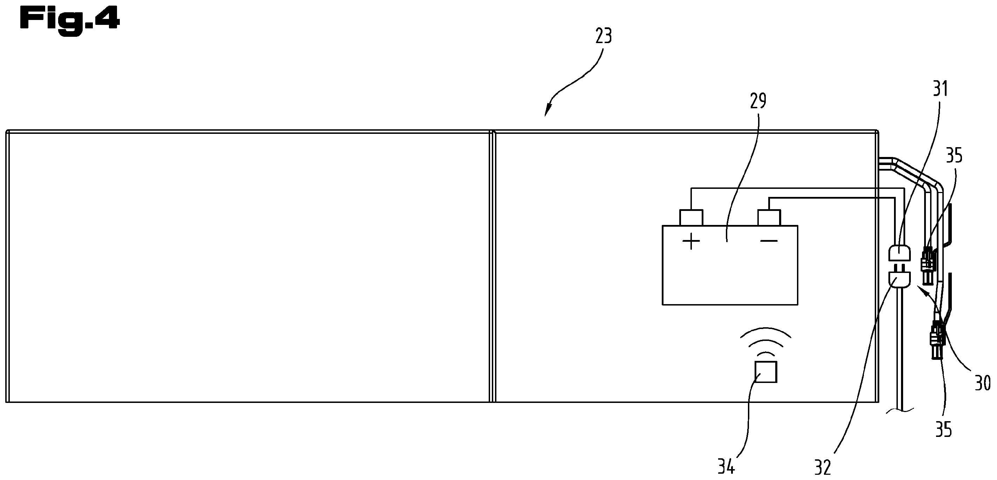

In der Fig. 4 ist eine weitere und gegebenenfalls für sich eigenständige Ausführungsform des Energiebereitstellungsmodules 23 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, kann vorgesehen sein, dass im Energiebereitstellungsmodul 23 ein Energieträger 29 angeordnet ist. Im vorliegenden Ausführungsbeispiel kann der Energieträger 29 in Form eines Akkumulators ausgebildet sein. Der Energieträger 29 kann mittels eines Energieversorgungsstecksystems 30 oder Kontaktplatten (Federvorgespannt) mit dem Fahrzeug 1 gekoppelt sein. Insbesondere kann vorgesehen sein, dass das Energieversorgungsstecksystem 30 einen ersten Stecker 31 umfasst, welcher mit dem Energieträger 29 gekoppelt ist. Weiters kann das Energieversorgungsstecksystem 30 einen zweiten Stecker 32 aufweisen, welcher mit dem Fahrzeug 1 gekoppelt sein kann. Im gesteckten Zustand des ersten Steckers 31 und des zweiten Steckers 32 kann das Fahrzeug 1 elektrisch leitend mit dem Energieträger 29 verbunden sein.

In einer ersten Ausführungsvariante ist es denkbar, dass der erste Stecker 31 und der zweite Stecker 32 nach dem Aufsetzen des Energiebereitstellungsmoduls 23 auf die Energiebereitstellungsmodulaufnahme 24 manuell miteinander verbunden werden.

In einer alternativen Ausführungsvariante ist es auch denkbar, dass der erste Stecker 31 und der zweite Stecker 32 derart am Energiebereitstellungsmodul 23 bzw. im Bereich der Energiebereitstellungsmodulaufnahme 24 angeordnet sind, dass beim Aufsetzen des Energiebereitstellungsmodules 23 auf die Energiebereitstellungsmodulaufnahme 24 der erste Stecker 31 automatisiert mit dem zweiten Stecker 32 gekoppelt wird.

In einer alternativen Ausführungsvariante ist es auch denkbar, dass der Energieträger 29 mittels eines Kontaktsystems mit dem Fahrzeug 1 gekoppelt ist. Das Kontaktsystem kann beispielsweise zwei oder mehrere Kontaktplatten umfassen, welche mit entsprechenden Gegenplatten zusammenwirken. Die Kontaktplatten können beispielsweise federnd ausgebildet sein oder Federelemente umfassen. Dadurch kann eine sichere Kontaktierung zur elektrischen Leitung zwischen den Kontaktplatten und den Gegenplatten erreicht werden.

Weiters kann vorgesehen sein, dass am Fahrzeug 1 eine Steuereinheit 33 ausgebildet ist, welche einen Digitalrechner umfassen kann. Mittels der Steuereinheit 33 können die Verfahrbewegungen bzw. die Arbeitsbewegungen des Fahrzeuges 1 gesteuert werden. Weiters ist es denkbar, dass mittels der Steuereinheit 33 ein Energiemanagementsystem angesteuert bzw. bereitgestellt wird.

Wie aus Fig. 4 weiters ersichtlich, kann vorgesehen sein, dass am Energiebereitstellungsmodul 23 ein Informationsträger 34 angeordnet ist. Der Informationsträger 34 kann zum eindeutigen Identifizieren der Art des Energiebereitstellungsmodules 23 dienen. In einer Weiterbildung ist es auch denkbar, dass der Informationsträger 34 zum eindeutigen Identifizieren jedes einzelnen der möglichen Energiebereitstellungsmodule 23 dient.

Der Informationsträger 34 kann beispielsweise in Form eines kabellos operierenden Datenträgers, wie etwa RFID-Transponder, ausgebildet sein. In einer alternativen Ausführungsvariante ist es auch denkbar, dass der Informationsträger 34 mit dem ersten Stecker 31 gekoppelt ist bzw. im ersten Stecker 31 verbaut ist, sodass eine Identifizierung des Energiebereitstellungsmodules 23 mittels des Energieversorgungsstecksystems 30 erfolgen kann.

In wieder einer anderen Ausführungsvariante ist es auch denkbar, dass am Energiebereitstellungsmodul 23 ein maschinenlesbarer Code angeordnet ist, welcher von einer am Fahrzeug 1 angeordneten Leseeinheit gelesen werden kann.

In wieder einer anderen Ausführungsvariante ist es auch denkbar, dass beim Wechsel des Energiebereitstellungsmoduls 23 durch eine manuelle Menüführung vom Maschinenbediener die Art des Energiebereitstellungsmodules 23 in die Steuereinheit 33 eingegeben wird.

In wieder einer anderen Ausführungsvariante ist es auch denkbar, dass durch ein mechanisches Codiersystem, wie etwa eine Lochanordnung, welche mit Binärgebern zusammenwirkt, eine Identifizierung des Energiebereitstellungsmodules 23 erreicht wird.

Wie aus Fig. 4 weiters ersichtlich, kann vorgesehen sein, dass eine Medienkupplung 35 zur Übertragung eines Fluids mit dem Energiebereitstellungsmodul 23 gekoppelt ist. Die Medienkupplung 35 kann beispielsweise zur Übertragung eines Kühlmittels zur Kühlung des Energieträgers 29 dienen. Wie beim Energieversorgungsstecksystem 30 kann auch bei der Medienkupplung 35 vorgesehen sein, dass diese manuell oder bei entsprechender Anordnung automatisiert mit dem Fahrzeug 1 gekoppelt werden kann. Entsprechend einer Weiterbildung kann auch vorgesehen sein, dass die Medienkupplung 35 im Energieversorgungsstecksystem 30 integriert ist.

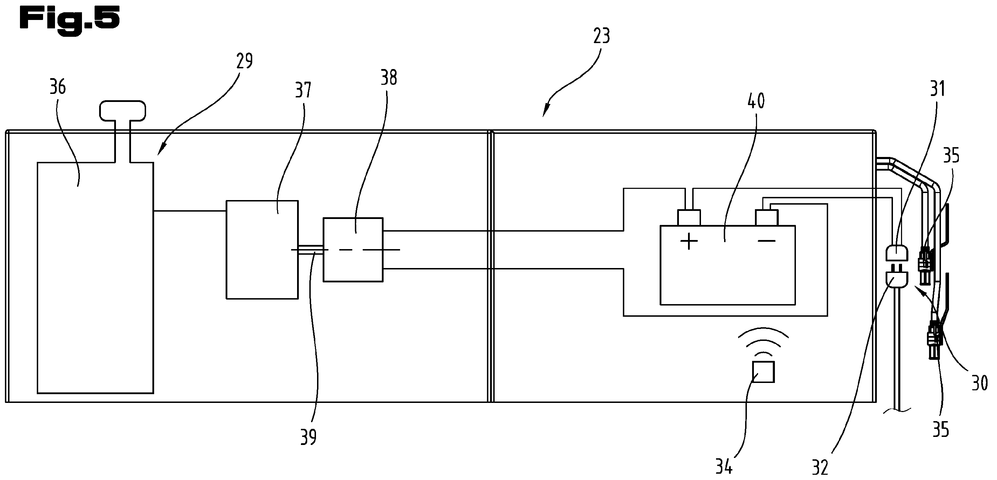

In der Fig. 5 ist eine weitere und gegebenenfalls für sich eigenständige Ausführungsform des Energiebereitstellungsmodules 23 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, kann vorgesehen sein, dass das Energiebereitstellungsmodul 23 einen Energieträger 29 in Form eines Kraftstofftanks 36 aufweist. Der Kraftstofftank 36 kann zum Versorgen einer Verbrennungskraftmaschine 37 mit Kraftstoff dienen. Weiters kann vorgesehen sein, dass die Verbrennungskraftmaschine 37 mittels einer Antriebswelle 39 mit einem Generator 38 zum Erzeugen von elektrischer Energie gekoppelt ist. Der Generator 38 kann mittels des Energieversorgungsstecksystems 30 mit dem Fahrzeug 1 elektrisch leitend gekoppelt sein. Weiters ist es auch denkbar, dass am Energiebereitstellungsmodul 23 ein Energiespeicher 40, beispielsweise in Form eines Akkumulators ausgebildet ist, welcher ebenfalls mit dem Generator 38 elektrisch leitend gekoppelt sein kann.

Durch die Ausbildung des Energiebereitstellungsmodules 23 bzw. die Auswechselbarkeit des Energiebereitstellungsmodules 23 kann ein und dasselbe Fahrzeug 1 für unterschiedliche Anwendungsgebiete eingesetzt werden. Wenn beispielsweise ein Fahrzeug mit einer erhöhten Leistung benötigt wird, ist es denkbar, dass an diesem beispielsweise ein Energiebereitstellungsmodul 23 mit einer Verbrennungskraftmaschine 37, wie in Fig. 5 beschrieben, aufgesetzt wird. Wenn jedoch ein Fahrzeug 1 möglichst geräuscharm bzw. emissionsarm sein soll, ist es denkbar, dass ein Energiebereitstellungsmodul 23 mit einem Akkumulator als Energieträger 29, wie dies in Fig. 4 beschrieben ist, auf das Fahrzeug 1 aufgesetzt wird.

Wie aus Fig. 3 weiters ersichtlich, kann vorgesehen sein, dass ein Schenkel des Energiebereitstellungsmodules 23 eine Schenkellänge 41 aufweist. Die Schenkellänge 41 kann zwischen 80 % und 120 %, insbesondere zwischen 90 % und 110 %, bevorzugt zwischen 98 % und 105 % der lichten Länge 16 betragen.

Weiters kann vorgesehen sein, dass eine Basis des Energiebereitstellungsmoduls 23 eine Basislänge 42 und eine Basisbreite 43 aufweist. Die Basislänge 42 kann zwischen 50 % und 100 %, insbesondere zwischen 70 % und 90 %, bevorzugt zwischen 75 % und 85 % der zweiten Länge 18 des zweiten Achsträgers 4 betragen. Die Basisbreite 43 kann zwischen 10 % und 100 %, insbesondere zwischen 15 % und 50 %, bevorzugt zwischen 25 % und 35 % der Gesamtbreite 19 des Fahrzeuges 1 betragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fahrzeug | 29 | Energieträger |
| 2 | Hubeinrichtung | 30 | Energieversorgungsstecksystem |
| 3 | erster Achsträger | 31 | erster Stecker |
| 4 | zweiter Achsträger | 32 | zweiter Stecker |
| 5 | Verbindungskonstruktion | 33 | Steuereinheit |
| 6 | Freiraum | 34 | Informationsträger |
| 7 | Längsachse Fahrzeug | 35 | Medienkupplung |
| 8 | Längsrichtung des Fahrzeuges | 36 | Kraftstofftank |
| 9 | Querrichtung des Fahrzeuges | 37 | Verbrennungskraftmaschine |
| 10 | Fahrerkabine | 38 | Generator |
| 11 | Auflageebene | 39 | Antriebswelle |
| 12 | Seitenrand des Achsträgers | 40 | Energiespeicher |
| 13 | erstes Radpaar erster Achsträger | 41 | Schenkellänge |
| 14 | zweites Radpaar zweiter Achsträger | 42 | Basislänge |
| | | 43 | Basisbreite |
| 15 | Länge des Fahrzeuges | | |
| 16 | lichte Länge | | |
| 17 | erste Länge erster Achsträger | | |
| 18 | zweite Länge zweiter Achsträger | | |
| 19 | Gesamtbreite Fahrzeug | | |
| 20 | Verbindungskonstruktionsbreite | | |
| 21 | Hubmast | | |
| 22 | Hubgabel | | |
| 23 | Energiebereitstellungsmodul | | |
| 24 | Energiebereitstellungsmodulaufnahme | | |
| 25 | Schenkelbreite | | |
| 26 | Kranlasche | | |
| 27 | Staplergabelaufnahme | | |
| 28 | Führungsstift | | |

## Patentansprüche

1. Fahrzeug (1) mit seitlicher Hubeinrichtung (2), umfassend zumindest einen ersten Achsträger (3) und einen zweiten Achsträger (4), wobei die beiden Achsträger (3, 4) mittels einer seitlich außermittig angeordneten Verbindungskonstruktion (5) miteinander gekoppelt sind und wobei die Hubeinrichtung (2) in einem Freiraum (6) zwischen den beiden Achsträgern (3, 4) angeordnet ist, wobei ein Energiebereitstellungsmodul (23) mit einem Energieträger (29) zum Bereitstellen einer Antriebsenergie ausgebildet ist, wobei eine Energiebereitstellungsmodulaufnahme (24) ausgebildet ist, welche zur Aufnahme des Energiebereitstellungsmoduls (23) dient, **dadurch gekennzeichnet, dass** das Energiebereitstellungsmodul (23) wechselbar an der Energiebereitstellungsmodulaufnahme (24) angeordnet ist und am Energiebereitstellungsmodul (23) ein erster Stecker (31) eines Energieversorgungsstecksystems (30) und an der Energiebereitstellungsmodulaufnahme (24) ein zweiter Stecker (32) des Energieversorgungsstecksystems (30) ausgebildet ist, wobei im gesteckten Zustand des ersten Steckers (31) und des zweiten Steckers (32) des Energieversorgungsstecksystems (30) eine Energieübertragungsverbindung zwischen dem Energiebereitstellungsmodul (23) und der Energiebereitstellungsmodulaufnahme (24) herstellbar ist, wobei die Energiebereitstellungsmodulaufnahme (24) zur Aufnahme von unterschiedlichen Arten von Energiebereitstellungsmodulen (23) mit unterschiedlichen Energieträgern (29) ausgebildet ist.

2. Fahrzeug (1) nach Anspruch 1, **dadurch gekennzeichnet, dass** das Energiebereitstellungsmodul (23) in Draufsicht gesehen L-förmig ausgebildet ist und oberhalb von Teilbereichen des zweiten Achsträgers (4) und Teilbereichen der Verbindungskonstruktion (5) angeordnet ist.

3. Fahrzeug (1) nach Anspruch 1 oder 2, **dadurch gekennzeichnet, dass** am Energiebereitstellungsmodul (23) zumindest eine Kranlasche (26) angeordnet ist oder dass am Energiebereitstellungsmodul (23) eine Staplergabelaufnahme (27) ausgebildet ist.

4. Fahrzeug (1) nach einem der Ansprüche 1 bis 3, **dadurch gekennzeichnet, dass** eine Steuereinheit (33) ausgebildet ist, wobei die Steuereinheit (33) derart ausgebildet ist, dass die jeweilige Art aus unterschiedlichen Arten des aktuell mit der der Energiebereitstellungsmodulaufnahme (24) gekoppelten Energiebereitstellungsmodules (23) erkennbar ist.

5. Fahrzeug (1) nach Anspruch 4, **dadurch gekennzeichnet, dass** am Energiebereitstellungsmodul (23) ein Informationsträger (34), insbesondere ein RFID-Transponder, angeordnet ist, welcher zur Identifizierung der Art des Energiebereitstellungsmoduls (23) dient.

6. Fahrzeug (1) nach einem der Ansprüche 1 bis 5, **dadurch gekennzeichnet, dass** am Energiebereitstellungsmodul (23) oder an der Energiebereitstellungsmodulaufnahme (24) Führungsstifte (28) angeordnet sind, wobei die Führungsstifte (28) vertikal ausgerichtet sind, sodass das Energiebereitstellungsmodul (23) vertikal geführt auf die Energiebereitstellungsmodulaufnahme (24) aufsetzbar ist und die Führungsstifte (28) zur horizontalen Positionierung des Energiebereitstellungsmodules (23) relativ zur Energiebereitstellungsmodulaufnahme (24) dienen.

7. Fahrzeug (1) nach einem der Ansprüche 1 bis 6, **dadurch gekennzeichnet, dass** der erste Stecker (31) des Energieversorgungsstecksystems (30) derart am Energiebereitstellungsmodul (23) und der zweite Stecker (32) des Energieversorgungsstecksystems (30) derart an der Energiebereitstellungsmodulaufnahme (24) positioniert ist, dass beim Aufbringen des Energiebereitstellungsmodules (23) auf die Energiebereitstellungsmodulaufnahme (24) automatisiert die Energieübertragungsverbindung herstellbar ist.

8. Fahrzeug (1) nach einem der Ansprüche 1 bis 7, **dadurch gekennzeichnet, dass** der Energieträger (29) in Form eines Kraftstofftankes (36) ausgebildet ist, welcher zur Kraftstoffversorgung einer am Energiebereitstellungsmodul (23) angeordneten Verbrennungskraftmaschine (37) dient, wobei die Verbrennungskraftmaschine (37) mit einem ebenfalls am Energiebereitstellungsmodul (23) angeordneten Generator (38) gekoppelt ist.

9. Fahrzeug (1) nach Anspruch 8, **dadurch gekennzeichnet, dass** zusätzlich zur Verbrennungskraftmaschine (37) und zum Generator (38) ein Energiespeicher (40) am Energiebereitstellungsmodul (23) angeordnet ist.

10. Fahrzeug (1) nach einem der Ansprüche 1 bis 9, **dadurch gekennzeichnet, dass** eine Medienkupplung (35) zur Übertragung eines Fluids ausgebildet ist.

11. Verfahren zum Betreiben eines Fahrzeuges (1) nach einem der vorhergehenden Ansprüche, **dadurch gekennzeichnet, dass** eine erste Art des Energiebereitstellungsmodules (23) von der Energiebereitstellungsmodulaufnahme (24) abgenommen und durch eine zweite Art des Energiebereitstellungsmodules (23) ersetzt wird.

12. Verfahren nach Anspruch 11, **dadurch gekennzeichnet, dass** die Art des aufgesetzten Energiebereitstellungsmodules (23) mittels einer Steuereinheit (33) automatisiert erkannt wird und Fahrzeugeinstellungen automatisiert an die Art des aufgesetzten Energiebereitstellungsmodules (23) angepasst werden.

## Claims

1. A vehicle (1) with a lateral lifting device (2), comprising at least a first axle carrier (3) and a second axle carrier (4), wherein the two axle carriers (3, 4) are coupled with one another by means of a connecting structure (5) arranged laterally off-center and wherein the lifting device (2) is arranged in a free space (6) between the two axle carriers (3, 4), wherein a power supply module (23) with an energy carrier (29) is configured to supply drive power, wherein a power supply module receiving means (24) is configured which serves to receive the power supply module (23), **characterized in that** the power supply module (23) is arranged changeably on the power supply module receiving means (24) and a first plug (31) of a power supply plug system (30) is configured on the power supply module (23) and a second plug (32) of the power supply plug system (30) is configured on the power supply module receiving means (24), wherein when the first plug (31) and the second plug (32) of the power supply plug system (30) are plugged in, a power transmission connection can be established between the power supply module (23) and the power supply module receiving means (24), wherein the power supply module receiving means (24) is configured to receive various types of power supply modules (23) with different energy carriers (29).

2. The vehicle (1) according to Claim 1, **characterized in that** when viewed from above the power supply module (23) is configured in an L-shape and is arranged above partial sections of the second axle carrier (4) and partial sections of the connecting structure (5).

3. The vehicle (1) according to Claim 1 or 2, **characterized in that** at least one crane splice (26) is arranged on the power supply module (23) or **in that** a lifting fork receiving means (27) is configured on the power supply module (23).

4. The vehicle (1) according to one of Claims 1 to 3, **characterized in that** a control unit (33) is configured, wherein the control unit (33) is configured in such a way that the respective type of the various types of power supply modules (23) currently coupled with the power supply module receiving means (24) is detectable.

5. The vehicle (1) according to Claim 4, **characterized in that** an information medium (34), in particular an RFID transponder, is arranged on the power supply module (23), which serves to identify the type of power supply module (23).

6. The vehicle (1) according to one of Claims 1 to 5, **characterized in that** guide pins (28) are arranged on the power supply module (23) or on the power supply module receiving means (24), wherein the guide pins (28) are aligned vertically, such that the power supply module (23) can be placed onto the power supply module receiving means (24) vertically and the guide pins (28) serve to position the power supply module (23) horizontally relative to the power supply module receiving means (24).

7. The vehicle (1) according to one of Claims 1 to 6, **characterized in that** the first plug (31) of the power supply plug system (30) is positioned in such a way on the power supply module (23) and the second plug (32) of the power supply plug system (30) is positioned in such a way on the power supply module receiving means (24) that when placing the power supply module (23) onto the power supply module receiving means (24) the power transmission connection can be established automatically.

8. The vehicle (1) according to one of Claims 1 to 7, **characterized in that** the energy carrier (29) is configured in the form of a fuel tank (36) which serves to supply fuel to a combustion engine (37) arranged on the power supply module (23), wherein the combustion engine (37) is coupled with a generator (38) also arranged on the power supply module (23).

9. The vehicle (1) according to Claim 8, **characterized in that** in addition to the combustion engine (37) and the generator (38), an energy storage device (40) is arranged on the power supply module (23).

10. The vehicle (1) according to one of Claims 1 to 9, **characterized in that** a media coupling (35) is configured for the transmission of a fluid.

11. A method for operating a vehicle (1) according to one of the preceding Claims, **characterized in that** a first type of the power supply module (23) is removed from the power supply module receiving means (24) and replaced by a second type of the power supply module (23).

12. The method according to Claim 11, **characterized in that** the type of power supply module (23) in place is automatically detected by means of a control unit (33) and vehicle configurations are automatically adjusted to the type of power supply module (23) in place.

## Revendications

1. Véhicule (1) avec un dispositif de levage latéral (2), comprenant au moins un premier support d'essieu (3) et un deuxième support d'essieu (4), les deux supports d'essieu (3, 4) étant couplés l'un à l'autre au moyen d'une structure de liaison (5) agencée de manière excentrée latéralement et le dispositif de levage (2) étant agencé dans un espace libre (6) entre les deux supports d'essieu (3, 4), un module d'alimentation en énergie (23) étant formé avec un vecteur énergétique (29) pour fournir une énergie d'entraînement, un logement de module d'alimentation en énergie (24) étant formé, qui sert à recevoir le module d'alimentation en énergie (23), **caractérisé en ce que** le module d'alimentation en énergie (23) est agencé de manière interchangeable sur le logement du module d'alimentation en énergie (24) et qu'un premier connecteur (31) d'un système de connexion d'alimentation en énergie (30) est formé sur le module d'alimentation en énergie (23) et qu'un deuxième connecteur (32) du système de connexion d'alimentation en énergie (30) est formé sur le logement du module d'alimentation en énergie (24), une connexion de transmission d'énergie pouvant être établie entre le module d'alimentation en énergie (23) et le logement du module d'alimentation en énergie (24) lorsque le premier connecteur (31) et le deuxième connecteur (32) du système d'alimentation en énergie (30) sont enfichés, le logement du module d'alimentation en énergie (24) étant conçu pour recevoir différents types de modules d'alimentation en énergie (23) avec différents vecteurs énergétiques (29).

2. Véhicule (1) selon la revendication 1, **caractérisé en ce que** le module d'alimentation en énergie (23) est réalisé en forme de L vu de dessus et est agencé au-dessus de parties du deuxième support d'essieu (4) et de parties de la structure de liaison (5).

3. Véhicule (1) selon la revendication 1 ou 2, **caractérisé en ce qu'**au moins une patte de levage (26) est agencée sur le module d'alimentation en énergie (23) ou **en ce qu'**un logement pour fourche de chariot élévateur (27) est formé sur le module d'alimentation en énergie (23).

4. Véhicule (1) selon l'une des revendications 1 à 3, **caractérisé en ce qu'**une unité de commande (33) est formée, l'unité de commande (33) étant conçue de telle sorte que le type respectif est reconnaissable parmi différents types de modules d'alimentation en énergie (23) actuellement couplés au logement de module d'alimentation en énergie (24).

5. Véhicule (1) selon la revendication 4, **caractérisé en ce qu'**un support d'informations (34), en particulier un transpondeur RFID, est agencé sur le module d'alimentation en énergie (23) et sert à identifier le type de module d'alimentation en énergie (23).

6. Véhicule (1) selon l'une des revendications 1 à 5, **caractérisé en ce que** des goupilles de guidage (28) sont agencées sur le module d'alimentation en énergie (23) ou sur le logement (24) du module d'alimentation en énergie, les goupilles de guidage (28) étant alignées verticalement de telle sorte que le module d'alimentation en énergie (23) puisse être placé verticalement sur le logement (24) du module d'alimentation en énergie et que les goupilles de guidage (28) servent au positionnement horizontal du module d'alimentation en énergie (23) par rapport au logement (24) du module d'alimentation en énergie.

7. Véhicule (1) selon l'une des revendications 1 à 6, **caractérisé en ce que** le deuxième connecteur (31) du système de connexion d'alimentation en énergie (30) est positionné sur le module d'alimentation en énergie (23) et le deuxième connecteur (32) du système de connexion d'alimentation en énergie (30) est positionné sur le logement du module d'alimentation en énergie (24) de telle sorte que, lors de la mise en place du module d'alimentation en énergie (23) sur le logement du module d'alimentation en énergie (24), la connexion de transmission d'énergie peut être établie automatiquement.

8. Véhicule (1) selon l'une des revendications 1 à 7, **caractérisé en ce que** le vecteur énergétique (29) est conçu sous la forme d'un réservoir de carburant (36) qui sert à alimenter en carburant un moteur à combustion interne (37) agencé sur le module d'alimentation en énergie (23), le moteur à combustion interne (37) étant couplé à un générateur (38) également agencé sur le module d'alimentation en énergie (23).

9. Véhicule (1) selon la revendication 8, **caractérisé en ce qu'**en plus du moteur à combustion interne (37) et du générateur (38), un accumulateur d'énergie (40) est agencé sur le module d'alimentation en énergie (23).

10. Véhicule (1) selon l'une des revendications 1 à 9, **caractérisé en ce qu'**un accouplement de fluide (35) est conçu pour la transmission d'un fluide.

11. Procédé pour faire fonctionner un véhicule (1) selon l'une des revendications précédentes, **caractérisé en ce qu'**un premier type de module d'alimentation en énergie (23) est retiré du support de module d'alimentation en énergie (24) et remplacé par un deuxième type de module d'alimentation en énergie (23).

12. Procédé selon la revendication 11, **caractérisé en ce que** le type du module d'alimentation en énergie (23) monté est détecté automatiquement au moyen d'une unité de commande (33) et les réglages du véhicule sont adaptés automatiquement au type du module d'alimentation en énergie (23) monté.
